# EUROPEAN PATENT SPECIFICATION

(11) **EP 0 731 814 B1**
(45) Date of publication and mention of the grant of the patent: **07.07.1999**
(21) Application number: 94902444.2
(22) Date of filing: 29.11.1993
(51) Int. Cl.: C08F 214/26, C08F 214/28, C08L 27/12, C08F 14/26

(54) **LOW-MELTING TETRAFLUOROETHYLENE COPOLYMER AND ITS USES**
NIEDRIGSCHMELZENDES TETRAFLUOROETHYLENCOPOLYMER UND SEINE VERWENDUNG
COPOLYMERE DE TETRAFLUOROETHYLENE A FUSION BASSE ET SES UTILISATIONS

(43) Date of publication of application: 18.09.1996
(73) Proprietor: E.I. DU PONT DE NEMOURS AND COMPANY, Wilmington Delaware 19898 (US)
(72) Inventor: MORGAN, Richard, Alan, Vienna, WV 26105 (US)
(74) Representative: Abitz, Walter, Dr.-Ing.
(86) International application number: US9311529
(87) International publication number: WO9514719

(56) References cited:
- EP-A- 0 197 562
- WO-A-94/05712
- US-A- 4 552 925
- US-A- 4 749 752
- US-A- 4 904 735
- US-A- 5 087 680
- US-A- 5 106 911

## Description

### FIELD OF THE INVENTION

This invention is in the field of partially-crystalline tetrafluoroethylene copolymers with hexafluoropropylene and at least one other fluoromonomer having unusually low crystalline melting temperatures, which makes them useful in solution form and as aids for the extrusion processing of polyolefins, including polyolefins incorporating antiblock agents.

### BACKGROUND OF THE INVENTION

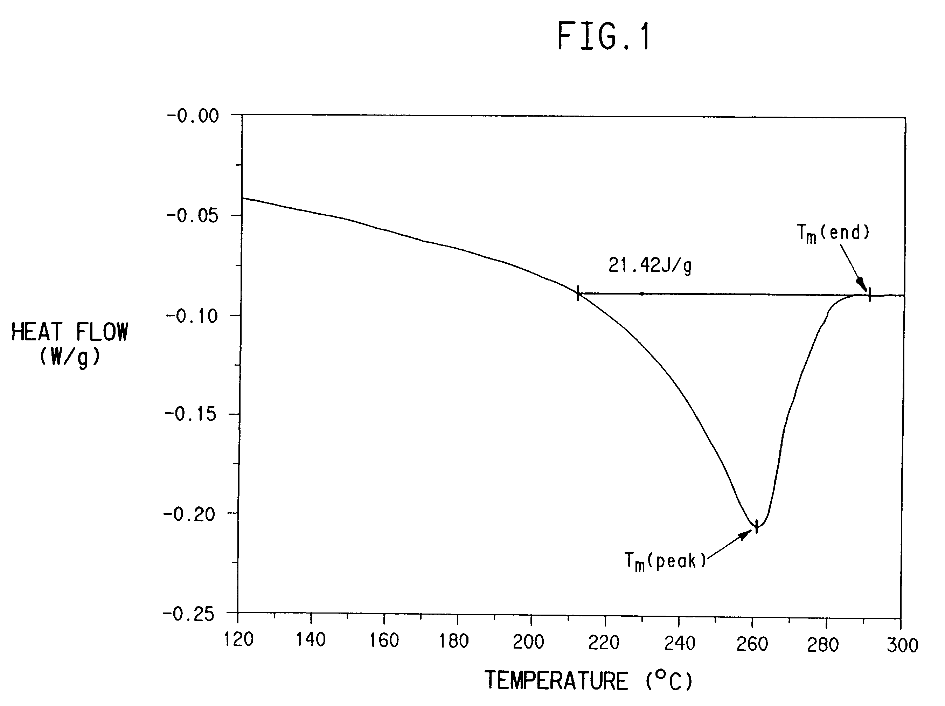

Homopolymers of TFE are crystalline or partially-crystalline fluoroplastics. Copolymerization with other monomers that introduce side groups into the polymer affects the properties of the polymers. Generally, at low levels of comonomer incorporation, both melting temperature Tₘ and crystallinity decrease with increasing comonomer content. Crystallinity is reflected, for example, by the heat of fusion per unit mass as determined by differential scanning calorimetry (DSC). At high levels of comonomer incorporation, all detectable crystallinity may vanish. If the monomers and their concentrations are properly chosen, and molecular weight is properly controlled, useful fluoroelastomers or fluoroplastics may be obtained. For example, the TFE copolymer with perfluoro (methyl vinyl) ether (PMVE) in the approximate molar composition TFE/PMVE = 70/30 is a well-known fluoroelastomer. On the other hand, copolymers of TFE with HFP or perfluoro (propyl vinyl) ether (PPVE) in the approximate molar compositions TFE/HFP = 92/8 and TFE/PPVE = 98.5/1.5 are well-known fluoroplastics. These particular perfluoroplastics have nominal Tₘ of about 260°C and 305°C, respectively, as judged by the peak of the melting endotherm by DSC. See Figure 1. The minimum Tₘ(peak) for fluoroplastics in these compositional families recognized by ASTM standards is 250°C for TFE/HFP polymers (ASTM D-2116) and 300°C for TFE/PPVE polymers (ASTM D-3307). Such fluoroplastics have had commercial utility in part because of their relatively high Tₘ and the mechanical properties that accompany the level of crystallinity associated with relatively low comonomer incorporation.

Partially-crystalline polymers are those which exhibit crystallinity under some conditions, as opposed to those polymers which are non-crystalline under all conditions. A partially-crystalline polymer typically exhibits crystallinity as polymerized, or after fabrication when the melted polymer is cooled slowly enough to permit development of molecular order. As is well-known, quenching from the melt can reduce or even preclude crystalline order in a specimen of a partially-crystalline polymer. The resulting quenched polymer is nevertheless considered partially crystalline because it started out, prior to melting and quenching, in this condition, and this condition is capable of being restored by reheating the polymer and cooling it more slowly. This effect is more likely for polymers with low crystallinity as polymerized. Crystallinity can be detected by several means, including differential scanning calorimetry (DSC).

There has been no interest in, and no commercial presence of, such fluoroplastics with comonomer concentration approaching but not reaching the level that completely eliminates crystallinity. The prior art does not exemplify TFE copolymers with perfluoroolefins having Tₘ below or even near 200°C.

Certain copolymers of tetrafluoroethylene (TFE) and hexafluoropropylene (HFP) are known. Bro & Sandt in U.S. Patent 2,946,763 disclose TFE/HFP copolymers with HFP content reflected by a specific infrared ratio, herein called HFP index or HFPI, in the range 1.5 to 6. They use a multiplier of 4.5 to convert HFPI to HFP content in wt%. Bro & Sandt teach that HFPI greater than 6 is extremely difficult to achieve. This is due to the low reactivity of HFP relative to that of TFE. An HFPI of 4.70 is the highest value exemplified. There are frequent references in the literature to TFE/HFP copolymers having HFP content of from 6.75 to 27 wt%, apparently following the disclosure of the 1.5 to 6 HFPI range and 4.5 multiplier by Bro & Sandt. U.S. Patents 4,075,362, 3,769,252 and Satokawa *et al* in U.S. Patent 3,904,575 refer to the TFE/HFP copolymers of U.S. Patent 2,946,763 for a teaching of a method of making such copolymers. The highest HFP content of any of the copolymers actually exemplified in the prior art is 25 wt% in U.S. Patent 4,075,362, corresponding to an HFPI of 5.56 according to the conversion factor of Bro & Sandt.

Khan & Morgan in U.S. Patent 4,380,618 uses a multiplier of 2.1 to convert HFPI into HFP content in mol%, so that the preferred compositional range of 6 to 9 mol% corresponds to an HFPI of 2.86 to 4.29. In the examples for TFE/HFP copolymers in U.S. Patent 4,381,384, HFP content of 5.4 mol% corresponds to an HFPI of 2.57.

Fluoropolymers are known to be useful as processing aids when used in low concentration in other polymers to mitigate effects such as melt fracture or high torque that limit rate of extrusion of these host polymers, thereby improving processibility. Polyolefins are a class of host polymers of particular interest. Blatz in U.S. Patent 3,125,547 teaches the use of fluoropolymers in polyolefins to facilitate extrusion. A general requirement taught by Blatz is that the fluoropolymer must be molten or fluid at the processing temperature Tₚ of the polyolefin. Blatz exemplifies fluoroelastomers, which are non-crystalline and for which the glass transition temperature T_{g} is well below Tₚ, and, therefore, are fluid at Tₚ. Blatz also exemplifies tetrafluoroethylene (TFE) homopolymer which melts 55°C below Tₚ. There is no teaching about how such fluoropolymers perform when an antiblock agent is present in the host polymer. A general problem with prior art processing aids is that the benefit of the aid is substantially reduced when an antiblock agent such as silica or talc is added to the polyolefin.

Smith & Gardner [Macromolecules 18, 1222 (1985)] review and discuss dissolution of polytetrafluoroethylene (PTFE). They report that PTFE had been dissolved only in perfluorinated alkanes. In summary discussion, Smith & Gardner point out that many polymers analogous to PTFE and TFE copolymers, i.e., non-hydrogen-bonding polymers, dissolve only just below their melting points. There are no known disclosures of solutions of melt-processible TFE/HFP copolymers of melt viscosity in the range 0.1x 10³ to 10 x 10³ Pa·s. In particular, there are no known disclosures of such copolymer/solvent systems that are stable and fluid at room temperature.

### SUMMARY OF THE INVENTION

As disclosed in U.S. Patent 5,266,639 granted on November 30, 1993, it has been discovered that TFE/HFP copolymers having HFPI within a specifically selected range exhibit surprising utility as processing aids in polyolefins and as solutions in highly-fluorinated solvents. These copolymers have low crystalline melting temperature Tₘ due to unusually high HFP content. The unexpected benefit of these TFE/HFP copolymers as processing aids is attributed to the fact that, because of low Tₘ, Tₘ can be brought into register with common processing temperatures Tₚ for polyolefins. Solutions of these copolymers are fluid at significant concentrations at modest temperatures, including room temperature for selected copolymer/ solvent systems, surprisingly so because Tₘ is so high above room temperature. The availability of solutions at modest temperatures enables TFE/HFP copolymers to be used in ways either not previously possible or at least inconvenient.

Specifically, the partially crystalline TFE/HFP copolymer has an HFPI of 6.4 to about 9. Preferred for reasons of utility and/or ease of synthesis are those copolymers having HFPI in the range of about 7.3 to 9.0, and most preferably from 7.3 to 8.5.

The copolymers disclosed in U.S. Patent 5,266,639 permit the presence of one or more additional copolymerizable monomers. The present invention is directed to preferred additional copolymerizable fluoromonomers as follows: fluorolefin other than TFE or HFP having 2 to 8 carbon atoms; perfluoro(alkyl vinyl) ether wherein the alkyl group contains 1 to 6 carbon atoms; and ester, alcohol, or acid functional fluorovinyl ether.

The invention is set out in claims 1 and 6. Preferred embodiments of the invention are disclosed in the dependent claims.

The invention also describes solutions of the copolymer in highly fluorinated solvents. Preferred solutions are based on solvents that permit dissolution of the TFE/HFP/other fluoromonomer copolymer at atmospheric pressure and provide stable solutions at room temperature.

This invention also describes the use of the TFE/HFP/other fluoromonomer copolymer, as processing aids in polyolefins. It offers substantial benefit in the absence of antiblock agents and very little restriction in performance in the presence of antiblock agents. The copolymer is partially crystalline (as hereinbefore described) with end of melting temperature Tₘ(end) in the range 180°-255°C, and preferably in the range 180°-235°C. When used as processing aids in polyolefins, the copolymers is preferably chosen to have Tₘ(end) values close to the processing temperature Tₚ of the polyolefin. This range is from 40°C below Tₚ to 25°C above Tₚ, preferably from 30°C below to 15°C above Tₚ, and most preferably from 20°C below Tₚ to 5°C above Tₚ.

The invention also describes coatings of the TFE/HFP/other fluoromonomer copolymer of the invention, and coated articles. When formed from solution, coatings can be dense low-surface-energy films with thicknesses ranging down to 10⁻⁸ m (100 angstroms).

### BRIEF DESCRIPTION OF THE FIGURES

Fig. 1 is a DSC trace for a prior-art TFE/HFP copolymer.

Fig. 2 is a DSC trace for a TFE/HFP copolymer without any other fluoromonomer to being present.

Fig. 3 is a plot of the reduction in extrusion pressure of polyethylene without antiblock agent resulting from the use of TFE/HFP copolymers of Fig. 2 as processing aids in the polyethylene, vs. the difference between Tₘ(end) and Tₚ.

Fig. 4 is a plot of the reduction in extrusion pressure of polyethylene containing an antiblock agent resulting from the use of TFE/HFP copolymers of Fig. 2 as processing aids in the polyethylene, vs. the difference between Tₘ(end) and Tₚ.

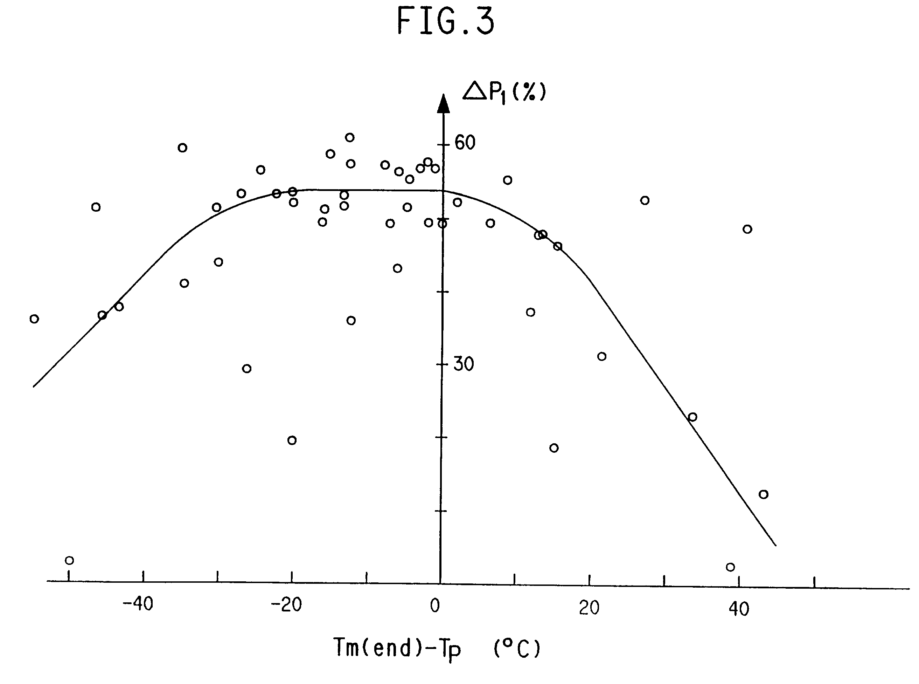

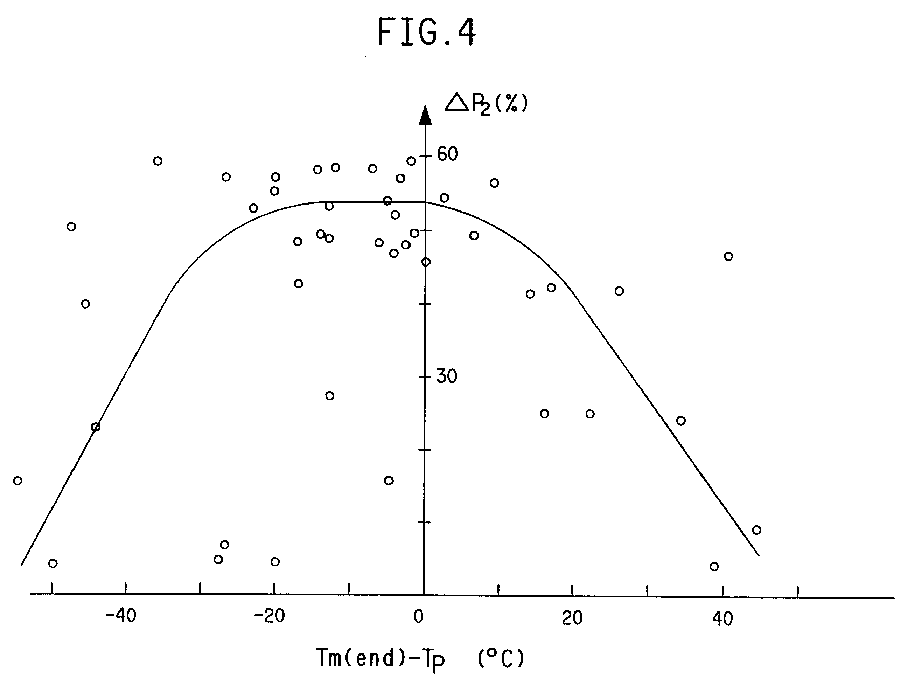

The lines in Figs. 3 and 4 represent the conclusions drawn from the data in the figures, and are not the result of a mathematical fit to the data.

### DETAILED DESCRIPTION OF THE INVENTION

TFE/HFP/other fluoromonomer copolymers with low melting temperature Tₘ due to high HFP content have now been made by careful adjustment and control of several parameters in a semi-batch dispersion (sometimes designated emulsion) polymerization process. These parameters include:
1) Extremely high HFP partial pressures in the range 83-95% of total monomer pressure.
2) Maintenance of the desired ratio of TFE and HFP monomers throughout the batch by careful balancing of polymer formation and initiator solution addition against consumption of HFP monomer to keep the partial pressure of HFP constant.
3) Use of a surfactant type and amount that promotes the formation of numerous very small dispersion particles and thus a high surface area for polymerization.
4) A dwell period of 10-30 min after full pressurization of the reactor, during which time no TFE is added beyond the precharged amount, to overcome a tendency to form TFE-rich copolymer early in the batch.
5) Reaction temperature as high as possible consistent with the problems or limitations recited above.

The additional comonomer other than TFE and HFP can be incorporated into the copolymer by either pre-charge, pre-charge plus subsequent addition (pumping), or pumping of the additional comonomer into the reactor, depending on the reactivity of the comonomer and the amount to be incorporated into the copolymer. The additional comonomer used in the present invention will have a F/C ratio of at least 1/1. Examples of such fluoromonomers include fluorolefins having 2 to 8 carbon atoms and being other than TFE and HFP, examples of which are perfluorobutyl ethylene, vinylidene fluoride, chlorotrifluoroethylene, and perfluorolefins having from 4 to 8 carbon atoms. Additional examples of such fluoromonomers include perfluoro(alkyl vinyl) ethers having the formula CF₂=CFO(R'_{*f*}O)_{κ} R_{*f*}, wherein κ is 0-5, R'_{*f*} is linear or branched perfluoroalkylene of 2 to 6 carbon atoms, and R_{*f*} is perfluoroalkyl of 1 to 6 carbon atoms, examples of which are perfluoro(methyl vinyl)ether and perfluoro(propyl vinyl) ether. Still additional examples of such fluoromonomer includes the functional fluorovinyl ethers, wherein the functionality is ester, alcohol, or acid. The ester-functional fluorovinyl ethers can be carboxylic ester or alcoholic ester. Examples of such fluorovinyl ethers include CF₂=CF[OCF₂CF(CF₃)]_{*m*}-O-(CF₂)_{*n*}CH₂OH as disclosed in U.S. Patent 4,982,009 and the alcoholic ester CF₂=CF[OCF₂CF(CF₃)]_{*m*}-O-(CF₂)_{*n*}-O-COR derived therefrom by reaction of the alcohol with pyridine,N,N-dimethylaminopyridine, and acetyl chloride in methylene chloride at atmospheric pressure and temperature of 5°-15°C. Additional fluorovinyl ethers include CF₂=CF[OCF₂CF(CF₃)]_{*m*}O(CF₂)_{*n*}COOH and its carboxylic ester CF₂=CF[OCF₂CF(CF₃)]_{*m*}O(CF₂)_{*n*}COOR disclosed in U.S. Patent 4,138,426. In these formulae, m = 0 to 3, n = 1 to 4, and R is methyl or ethyl. Preferred such fluorovinyl ethers are CF₂=CF₂OCF₂CF(CF₃)O(CF₂)₂CH₂OH and CF₂=CF₂OCF₂CF(CF₃)O(CF₂)₂COOH. These fluoromonomers are preferred either because of their availability or their ability to incorporate functionality into the resultant copolymer. The amount of these fluoromonomers that can be incorporated into the TFE/HFP copolymer will depend on the modification to the TFE/HFP copolymer desired, so long as the HFPI range is observed and the copolymer containing other fluoromonomer is still partially crystalline. The amount is from 0.1 to 10%, based on the weight of the resultant copolymer.

The resultant TFE/HFP/other fluoromonomer copolymers of this invention containing one or more additional monomers have HFPI in the range 6.4 to about 9. The HFPI range of about 7.3 to 9.0 is preferred, and the range 7.3 to 8.5 is most preferred. These copolymers can have melt viscosity (MV) in the range of about 0.1x 10³ to about 10 x 10³ Pa·s, preferably 0.5 x 10³ to 5 x 10³ Pa·s.

The polymers of this invention may be made at least by the method known as dispersion (or emulsion) polymerization, and dispersion (or emulsion) polymerization in the presence of a solvent.

The minimum HFP partial pressure that can be used to make the TFE/HFP/other fluoromonomer copolymer of this invention containing one or more additional monomers by the present semi-batch process is about 500 psig (3.4 MPa) out of 600 psig (4.1 MPa) total monomer pressure. HFP partial pressure is preferably about 525 psig (3.6 MPa), most preferably about 550 psig (3.8 MPa) out of 600 psig total monomer pressure. Higher, or slightly lower, total monomer pressure may be used, in which case HFP partial pressure should be adjusted proportionately.

The surfactant should be chosen to obtain high dispersion particle surface area (small particle size) in order to enhance reaction rate which is suppressed by the high concentration of HFP relative to TFE. The quantity required to achieve this objective will vary with the composition of the surfactant. The concentration of surfactant should be less than 0.4 wt%, preferably less than 0.2 wt%, based on the aqueous medium. Suitable surfactants include ammonium perfluorononanoate, and the perfluoroalkyl ethane sulfonic acids and salts thereof disclosed in U.S. Patent 4,380,618. Of these, the mixture of C₆-C₁₆ perfluoroalkyl ethane sulfonic acids sold as Zonyl® TBS fluorochemical surfactant (Du Pont Company) is preferred.

Temperatures in the range of about 103°-108°C are suitable for making the TFE/HFP/other fluoromonomer copolymers of this invention by the semibatch process used. In addition to the limitations of high-temperature polymerization outlined in the background section, surfactants used in emulsion polymerization appear to be less effective at temperatures above 103°-108°C and there is a tendency to lose dispersion stability.

Initiators commonly employed in emulsion polymerization of TFE copolymers are water-soluble free-radical initiators such as ammonium persulfate (APS), potassium persulfate (KPS), or disuccinic acid peroxide. APS and/or KPS is preferred.

After the reactor is charged with water, surfactant and monomers, heated to the chosen temperature, and agitation is started, a solution of initiator is added at a prescribed rate to initiate polymerization. It is preferred that pressure is allowed to drop as polymerization starts, and no TFE is added for a prescribed time, during which the initiator solution is continuously added. Then, TFE addition is started and controlled according to the scheme chosen to regulate the polymerization. It is possible to make a copolymer with high HFP content without this dwell period, but the dwell period reduces the high-melting tail of the DSC trace, resulting in a narrower range of melting.

There are several alternatives for regulating the rate of FEP polymerization. It is common with most alternatives first to precharge all HFP monomer and then to add TFE to the desired total pressure. Additional TFE is then added after initiator injection and reaction kickoff to maintain the chosen pressure. The TFE may be added at a constant rate, with agitator speed changed as necessary to increase or decrease actual polymerization rate and thus to maintain constant total pressure. Alternatively, the total pressure and the agitator speed may both be held constant, with TFE added as necessary to maintain the constant pressure. A third alternative is to carry out the polymerization in stages with variable agitator speed, but with steadily increasing TFE feed rates. The latter two alternatives provide the most homogenous product (uniform distribution of TFE and HFP) and are preferred. Addition of the additional monomer does not prevent the incorporation of the high amount of HFP into the copolymer, wherein the HFPI of the copolymer will be 6.4 to about 9, and the resultant copolymer retains its partial crystallinity. Maintenance of a constant ratio of the monomers present in the polymerization reaction will give a homogeneous polymer, e.g., with the monomer units being randomly distributed with the copolymer.

After polymerization and discharge of the copolymer dispersion from the reactor, the polymer may be isolated from the aqueous medium by one of the means well known in the art. One method is to stir vigorously until the polymer separates out as a non-water-wet powder which floats on the water and can be collected on a filter or decanted from the water. An electrolyte such as ammonium carbonate or nitric acid can be added to the dispersion by vigorous stirring. The polymer can be dried as collected or pressed to remove a portion of the water before drying. Another method is to stir the dispersion only until it thickens into a water-wet gel and then collect the polymer on a filter. The filtered polymer can be dried directly or can be washed with water or organic solvents such a methanol or acetone before drying. Pressing is not necessary because polymer collected in this manner is less prone to hold water droplets. Another method of isolation is spray-drying of the dispersion or the water-wet gel. Still another method of polymer isolation that can be used is the technique known as solvent-aided pelletization. In this method, the dispersion is first gelled either mechanically or chemically by the addition of an electrolyte such as ammonium carbonate or nitric acid. The gel is then broken by addition of a water-immiscible organic solvent with low surface tension, preferably not more than 35 dyne/cm, accompanied by agitation. Suitable solvents include hydrocarbon, halocarbon, and hydrohalocarbon liquids. If an agglomerating isolation technique is used, the temperature of the isolating process may influence the size or the friability of the resultant agglomerates.

Isolated wet polymer can be dried by any method suitable for drying finely divided solids. Air flow through the drying chamber should be consistent with the desire or any requirement to avoid blowing the powder about. The drying technique, temperature, and time chosen should be consistent with intended use of the dried polymer. If the polymer is to be used as a finely-divided powder, compaction of the powder mass and particle-to-particle fusion must be avoided. Since the TFE/HFP/other fluoromonomer copolymers of this invention melt at unusually low temperatures, the drying temperature likewise must be low to obtain a free-flowing, finely-divided powder.

If the polymer is not to be used as a powder, higher drying temperatures can be used. If appropriate, conventional thermoplastic finishing techniques including extrusion formation of cubes or pellets can be used.

The TFE/HFP/other fluoromonomer copolymers of this invention may have uses in dispersion form. In that case, the as-polymerized (raw) dispersion may be used as discharged from the reactor if it has adequate stability for the intended purpose. Alternatively, the raw dispersion can be stabilized by addition of surfactants, or concentrated and stabilized by techniqes well known in the art.

The TFE/HFP/other fluoromonomer copolymers of this invention can be in solution in highly fluorinated solvents. Because of their composition, they are unusually easy to dissolve and can provide stable, fluid copolymer/solvent systems at ambient temperature. Perfluorinated compounds are preferred as solvents, but fluorinated compounds having up to about 12.5 atomic percent (at%) hydrogen and/or about 37.5 at% chlorine can be used. Compounds most useful as solvents are highly fluorinated cycloalkanes or aromatics, both of which may contain fused or unfused rings. Highly fluorinated cycloalkanes are preferred. Both types of compounds may be substituted by perfluoroalkyl or perfluoroalkylene groups. For dissolution at atmospheric pressure, solvents with boiling points of about 140°C or greater are required. Under autogenous pressure, solvents with boiling points of about 70°C or greater are required. Compounds useful as solvents include, but are not limited to, perfluorodecalin, perfluoro(1-methyldecalin), perfluoro(dimethyldecalin), perfluoro(tetradecahydrophenanthrene), perfluoronaphthalene, perfluoromethylcyclohexane, perfluorobiphenyl, perfluoro(cyclohexylmethyl)decalin, and higher boiling adducts. Certain nitrogen-containing solvents such as perfluoro(triamylamine) may also be used. Preferred solvents are perfluorodecalin and perfluoro(tetradecahydrophenanthrene).

Solutions can be prepared in a broad range of solvents at elevated temperature and under pressure. Solutions can be prepared at elevated temperature and at atmospheric pressure for a selected range of solvents with relatively high boiling points (BP). The temperature required for dissolution of the TFE/HFP/other fluoromonomer copolymers varies with the solvent and the composition of the copolymer. For example, perfluorobenzene (BP = 80°C) readily dissolves a TFE/HFP/other fluoromonomer copolymer of this invention under autogenous pressure at 85°--90°C, but would not dissolve the polymer at atmospheric pressure.
Perfluoro(tetradecahydrophenanthrene) (BP = 215°C) dissolves the same copolymer at about 115°C under autogenous pressure, but also can be used to prepare solutions at atmospheric pressure.

Solutions having concentrations of the TFE/HFP/other fluoromonomer copolymer of this invention of 10% and higher, 20% and 30% by weight, for example, can be made. Lower concentrations in the 1-5 wt% range are preferred for many purposes. Solution viscosity, of course, increases with polymer concentration. Solutions in selected solvents with polymer concentration in excess of about 2.5 wt% form gels when quiescently cooled to room temperature. Solutions at about 2.5 wt% and lower concentration in selected solvents form low-viscosity stable copolymer/solvent systems at room temperature. The exact nature of these fluid systems at or near room temperature is not known with certainty. They may be solutions, though sometimes subtle changes in optical properties may occur upon cooling. However, they may be microgels or colloidal dispersions. A copolymer/solvent system is considered to be stable if centrifuging does not substantially change the copolymer concentration in the solvent. This might occur even for a suspension, for example, if solvent and suspended particles had the same densities. The maximum concentration at which the system remains stable and fluid when quiescently cooled to room temperature in a particular solvent varies slightly with the composition of the TFE/HFP copolymer. Some solutions that form gels when quiescently cooled to room temperature can be kept fluid by shearing (stirring) while cooling. These latter systems may thicken with time, but remain pourable, and can be thinned again by restirring. The designation "copolymer/solvent system" is herein adopted to describe all of the fluid, stable systems of uncertain nature at and near room temperature. Solutions in certain other solvents precipitate and form low-viscosity suspensions when cooled to room temperature, and are useful as such. Selected copolymer/solvent systems with copolymer concentrations up to about 2.5 wt% are easily sprayable at room temperature. Suspensions are sprayable at higher concentrations.

The TFE/HFP/ other fluoromonomer copolymers of this invention can be used in many ways. One use for which the melting temperature range of these selected TFE/HFP copolymers makes them surprisingly superior is as a processing aid in polyolefins. This aspect of the invention is discussed in detail below. The copolymer resins can be used in powder or pellet form in any of the processes such as extrusion, molding, or pressing by which thermoplastics are conventionally fabricated into finished articles, providing the properties of the copolymer are suitable for the intended use. Such articles include film, tubing, hose, wire insulation, foamed structures including wire insulation, coatings on wire for mechanical uses, injection-molded items, blow-molded articles, protective linings, laminates and other composite structures, and the like. Some laminates are essentially coated articles. The unique low-melting characteristics make the TFE/HFP/other fluoromonomer copolymers of this invention suitable for uses not accessible to prior-art perfluoroplastics because properties were inappropriate or because required processing temperatures were too high. For example, a TFE/HFP/other fluoromonomer copolymer of this invention can be used as a melt adhesive at moderate temperature. High processing temperatures of prior-art perfluoroplastics disqualified them for use in conjunction with many other materials which could not tolerate exposure to those temperatures.

In aqueous dispersion form, the TFE/HFP/other fluoromonomer copolymers of this invention can be used according to any of the conventional techniques for using fluoropolymer dispersions, including coating, casting, and impregnation. Normally, after the copolymer dispersion particles are deposited in place in the wet state, the deposit is dried and the particles are fused thermally. Other materials can be blended into the TFE/HFP copolymer dispersions for these uses, or such blends can be co-coagulated as a step toward dry blends or filled resins.

The TFE/HFP/other fluoromonomer copolymer solutions, suspensions, and copolymer/solvent systems of this invention can be used in many ways, making it possible to achieve end results that could not be achieved with previously available perfluoropolymers or could be achieved only in less convenient ways. These results include any of the results for which polymer solutions are used, such as coating, encapsulation, and impregnation. The TFE/HFP copolymer solutions, suspensions, and copolymer/ solvent systems of the invention can be employed in any of the methods by which solutions are known to be used, including dipping, painting, and spraying.

The TFE/HFP/other fluoromonomer copolymer solutions, suspensions and copolymer/ solvent systems of this invention can be used to make coatings on a broad range of substrate materials, including metal, semiconductor, glass, carbon or graphite, and natural and synthetic polymers. The substrates can be in a broad range of physical forms, including film or paper, foil, sheet, slab, coupon, wafer, wire, fiber, filament, cylinder, sphere, and other geometrical shapes, as well as in a virtually unlimited number of irregular shapes. Coatings can be applied by methods known in the art, including dipping, spraying, and painting. For plane substrates of suitable dimensions, spin coating can be employed. Porous substrates can also be coated or impregnated. These include, for example, screens, foams, microporous membranes, and woven and non-woven fabrics. In making such coatings, the solvent can be driven off by heat leaving a dry, TFE/HFP/other fluoromonomer copolymer coating. One advantage of selected solutions or copolymer/solvent systems over aqueous dispersions for coating purposes is that coatings can be achieved below the melting temperature of the TFE/HFP/other fluoromonomer copolymer. Another advantage is that extremely thin coatings can be achieved, as thin as 100 angstroms or possibly even thinner depending on the coating characteristics required.

The TFE/HFP/other fluoromonomer copolymer gels of this invention can be used to apply the copolymer to a site where it would be disadvantageous to use a low viscosity solution, suspension, or copolymer/solvent system.

Coatings of the TFE/HFP/other fluoromonomer copolymers of this invention can be a sole coating on a substrate, or a component of a multilayer coating. For example, a TFE/HFP/other fluoromonomer copolymer coating of this invention can be used as a first or primer, intermediate, or final coating in a multilayer fluoropolymer coating system. The coatings of this invention include coatings resulting from several successive applications of solution, suspension, or copolymer/solvent systems to increase coating thickness to desired levels.

Coatings of this invention can consist of the TFE/HFP/other fluoromonomer copolymers of this invention alone, or of the TFE/HFP/other fluoromonomer copolymers admixed with minor amounts of other materials either soluble in the solvent or dispersed in the coating solution, suspension, or copolymer/solvent system. A minor amount can be up to about 10 wt% based on the combined weight of TFE/HFP/other fluoromonomer copolymer and additive.

Solutions can also be used to make microporous membranes from the selected TFE/HFP/other fluoromonomer copolymers of this invention by conventional solution immersion casting methods.

Specific coated articles are within the scope of this invention.

Coated articles include molds for rubber and plastic parts, and polymer extrusion dies. The TFE/HFP/other fluoromonomer copolymers of this invention both as-polymerized and after fluorine treatment can be used in coatings. In the case of dies used for extrusion of polyolefins, it is preferred that coatings be made from as-polymerized resin because such coatings are more durable. Both interior and exterior surfaces of extrusion dies may be coated to, respectively, facilitate extrusion and alleviate die buildup.

Coated articles include gasoline engine carburetor parts; internal parts of internal combustion engines such as valves and piston skirts; razor blades; metal containers such as cans, pans, trays, vessels, and the like; metal sheets and foils; continuous metal belts; metal rods, tubes, bars, profiles, and the like; bolts, nuts, screws, and other fasteners.

Coated articles include an article bearing a machine-readable marking on at least one surface, especially but not limited to a tag that can be attached to another object to provide information about inventory identification, contents, ownership, hazards, operating conditions, or maintenance requirements, for example.

Coated articles include wire for electrical and mechanical service. In either case, the metal wire may be solid or stranded. Wires for mechanical service include catheter guide wire and the actuating wire of push-pull cable.

Coated articles include rubber o-rings, seals, beading, gasketing, and the like.

Coated articles include paper, woven fabrics including glass fabric, non-woven fabrics, felts, and the like.

Coated articles include foams, membranes, and the like.

Coated articles include optical fibers in which the substrate is a glass or plastic fiber.

Coated articles include semiconductors, semiconductor devices, magnetic storage media including disks, photoconductors, electronic assemblies, and the like.

As stated above, one use for which the melting temperature range of TFE/HFP/other fluoromonomer copolymers of this invention makes them surprisingly superior as a processing aid in polyolefins. Superior performance was unexpectedly found to be associated with the near coincidence of the end of the melting temperature range for the TFE/HFP/other fluoromonomer copolymer and the processing temperature Tₚ for the polyolefin. As illustrated by examples to follow, the superior performance is not realized if copolymer melting ends either too far below Tₚ or too far above Tₚ. The desired end of melting is in a range from 40°C below Tₚ to 25°C above Tₚ, preferably from 30°C below to 15°C above Tₚ, and most preferably from 20°C below Tₚ to 5°C above Tₚ.

The surprisingly superior performance of the TFE/HFP/other fluoromonomer copolymer of the present invention as a processing aid, attributed to the near coincidence of polyolefin processing temperature and the end of the melting temperature range of the processing aid, was found to extend to other highly-fluorinated partially-crystalline polymers. Specifically, the fluoropolymer processing aids can be copolymers of two or more fluoromonomers, with composition that places Tₘ(end) close to Tₚ. Suitable monomers include fluoroolefins and fluoroalkyl vinyl ethers. Preferred monomers include the perfluoroolefins TFE and CF₂=CFR_{f}, perfluoro(alkyl vinyl) ether CF₂=CFOR_{f}, and perfluoroalkyl ethylene CH₂=CHR_{f}, in which R_{f} is a perfluoroalkyl group with 1-5 carbon atoms. Limited amounts of hydrogen-containing monomers may be employed provided the hydrogen content of the polymer does not exceed about 2 wt%, and preferably does not exceed about 1 wt%. Especially preferred are copolymers of TFE and HFP, optionally including minor amounts of other preferred monomers. These partially-crystalline fluoropolymer processing aids may be used alone or in conjunction with other processing aids known in the art, including fluoroelastomers.

When the TFE/HFP/ other fluoromonomer copolymer of this invention is used as a processing aid in a polyolefin for film applications, the polyolefin generally will have a melt index (ASTM D-1238) of 5.0 or less at 190°C, preferably 2.0 or less. For high-shear melt processing such as fiber extrusion or injection molding, even high-melt-index resins, for example, those having a melt index of 20 or more, may suffer processing difficulties. Such polyolefins may comprise any thermoplastic hydrocarbon polymer obtained by the homopolymerization or copolymerization of one or more monoolefins of the formula CH₂=CHR' wherein R' is an alkyl radical, usually of not more than eight carbon atoms. In particular, this invention is applicable to the following: polyethylene, both of the high-density type and the low-density type having densities within the range 0.89-0.97; polypropylene; polybutene-1; poly(3-methylbutene); poly(4-methylpentene); and linear low density copolymers of ethylene and an alpha-olefin, such as propylene, butene-1, pentene-1, hexene-1, heptene-1, octene-1, decene-1, octadecene-1, or n-methylpentene-1.

Because of the different melt characteristics of the olefin polymers mentioned, the addition of the fluoropolymer process aids of this invention may be of greater value in some polyolefins than in others. Thus, polyolefins such as polypropylene and branched polyethylene, that have low molecular weight or broad molecular weight distributions and, therefore, have good melt flow characteristics even at low temperature, may not require the use of the fluoropolymer additives or be noticeably improved by them, except under unusual, adverse extrusion conditions. However, for polymers such as high molecular weight, high density polyethylene or linear low density ethylene copolymers, particularly those with narrow or very narrow molecular weight distributions, addition of the fluoropolymers is especially beneficial.

Such polyolefins are typically processed by extrusion techniques at melt processing temperatures Tₚ in the range 175°-275°C. The commercially important blown-film process is usually carried out at Tₚ in the range 200°-250°C, and commonly at 200°-230°C. Tₚ in these blown-film processes is below, and in the lower range is substantially below, Tₘ of prior art TFE/HFP copolymer resins as discussed above. Thus, these prior art resins would be solid at Tₚ as described in U.S. 4,904,735.

The polyolefins may contain assorted additives used in the art, such as but not limited to antioxidants, acid scavengers, light stabilizers, pigments, slip agents, and lubricants. In particular, finely divided solids such as silica or talc may be incorporated as antiblock agents.

It is important for effective performance as a processing aid that the fluoropolymer resin be well-dispersed in the host resin. Although precise quantitative characterization is not possible, it appears desirable that a significant fraction of the fluoropolymer resin be dispersed in the host with fluoropolymer particle size of less than about 0.5 µm and preferably less than about 0.3 µm. Since the raw dispersion particle size obtained in polymerization is typically 0.05-0.2 µm, little agglomeration is desired. Therefore, for processing aid use, techniques chosen for isolation of the fluoropolymer resin from the raw dispersion should be among those that preserve the fundamental particle character or yield loose agglomerates that are readily dissociated upon incorporation into the host resin.

For effective performance as a processing aid, the melt viscosity (MV) of the fluoropolymer should be neither too low nor too high. For highly fluorinated partially-crystalline fluoropolymers in general, the MV range 0.1x 10³ to 20 x 10³ Pa·s is suitable and the range 0.5 x 10³ to 15 x 10³ Pa·s is preferred. For the TFE/HFP/other fluoromonomer copolymers of this invention, the MV range 0.1 x 10³ to 10 x 10³ Pa·s appears to be suitable. It appears that, as the MV of the TFE/HFP copolymer resins decreases, such resins become less effective as processing aids in the presence of antiblock agents as the difference between Tₚ and Tₘ(end) increases. Accordingly, a minimum MV of 0.5 x 10³ Pa·s is preferred and the MV range 0.5 x 10³ to 5 x 10³ Pa·s is most preferred for these copolymers.

The concentration of fluoropolymer processing aid in the host resin at fabrication into the final article should be high enough to achieve the desired effect in improving processibility, but not so high as to have adverse economic impact. The amount required can vary with the effect desired, the host resin, additives used in the host resin, and the processing conditions which may be different from the laboratory conditions reported in the following examples. Under certain conditions, concentrations of 100 ppm or less, as low as 50 ppm or even 25 ppm, can be effective. Under other conditions, the effective amount may be 1000, 2000, or even 5000 ppm. For special purposes, concentrations of 10% or even 25% may be appropriate. The fluoropolymer processing aid can be incorporated into the host resin at the desired final concentration, or can be incorporated into a masterbatch or concentrate that is added to the host resin in a ratio calculated to yield the desired final concentration. When the fluoropolymer is a TFE/HFP copolymer and a masterbatch is to be made, it is advantageous to subject the copolymer powder to fluorine treatment.

### EXAMPLES

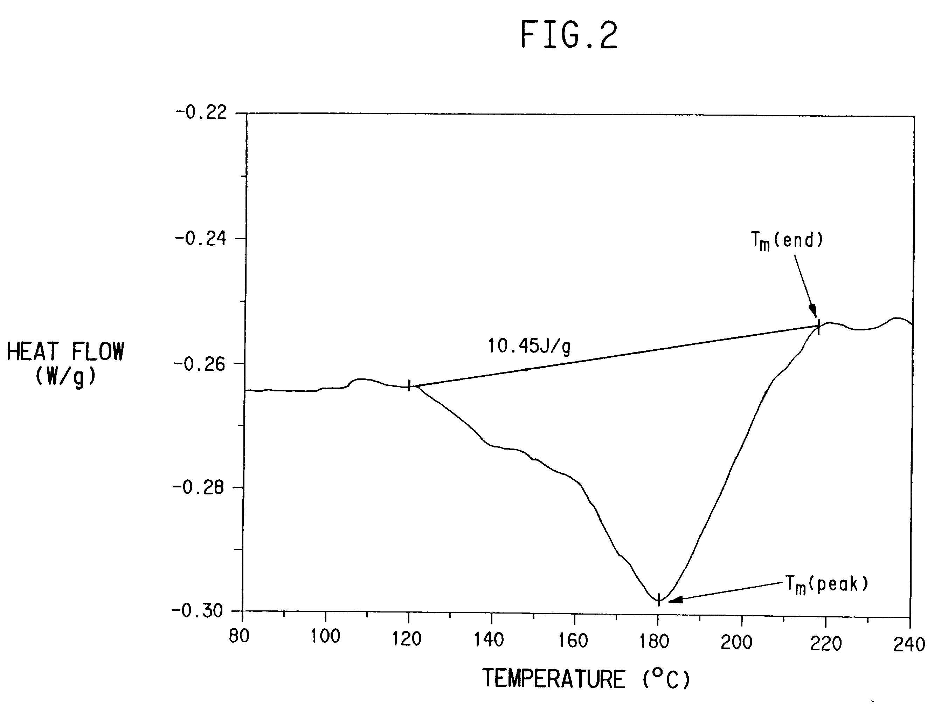

Melting characteristics of fluoroplastics were determined by DSC by the method of ASTM D-4591-87, except that the end of the melting range, here designated Tₘ(end), was determined according to the general method ASTM E794-85. Tₘ(end) is regarded as the temperature at which the entire specimen is melted. Figure 1 shows the DSC melting trace for a commercial TFE/HFP copolymer resin of Type I in ASTM D-2116-83. The width of the melting endotherm may be due to a distribution of polymer composition in the sample. Heat of fusion for Type I copolymer is about 20-24 J/g. Figure 2 shows the DSC trace for an experimental TFE/HFP copolymer resin with higher HFP content and consequently lower melting temperature range than the copolymer of Figure 1. Crystallinity is also lower as indicated by lower heat of fusion, about 10.5 J/g. For TFE/HFP copolymers with Tₘ(peak) = 170°-180°C, heat of fusion is typically 8-14 J/g. Since thermal history can affect crystallinity, DSC specimens were dried at temperatures no higher than 100°C.

Fluoropolymer compositions were determined by infrared spectroscopy on 0.025-0.051 mm thick films pressed at 300°C. For TFE/HFP copolymers, Fourier transform infrared spectroscopy was employed in the method described in U.S. Patent 4,380,618. In applying this method, the peak absorbances of bands found at about 10.18 µm and at about 4.25 µm were used, not the absorbances at these exact wavelengths unless they were also the peak absorbances. HFP content is expressed as an index HFPI, the ratio of the two peak absorbances. Multiplication of HFPI by 2.1 would yield the HFP content in mol% according to current calibration by ¹⁹F NMR.

Melt viscosities of the partially-crystalline fluoropolymers were determined by ASTM method D1238-52T modified as described in U.S. Patent 4,380,618, except that a weight of 833 g was used for samples with MV below about 10³ Pa·s.

### Example 1 (outside the scope of the claims)

A cylindrical, horizontally disposed, water-jacketed, paddle-stirred, stainless steel reactor having a length to diameter ratio of about 1.5 and a water capacity of 79 parts by weight was charged with 48.5 parts of demineralized water. The reactor was heated to 65°C, evacuated, purged with TFE, and then evacuated again. The vacuum in the reactor was then used to draw in a solution of 0.055 parts of Zonyl® TBS surfactant in water (1.8 parts). The solution was rinsed into the reactor with another 0.88 parts of water. The reactor was then sealed, agitation was begun at 38 rpm, and the reactor temperature was raised to 103°C. After the temperature had become steady at 103°C, HFP was added slowly to the reactor until the pressure was 545 psig (3.8 MPa). Then TFE was added to the reactor to achieve a final pressure of 600 psig (4.1 MPa). Then 1.32 parts of a freshly prepared 0.45 wt% aqueous solution of ammonium sulfate (APS) initiator were pumped into the reactor at 0.11 part/minute. Thereafter, a 0.93 wt% APS solution was added to the reactor at 0.022 part/minute was added to the reactor for the remainder of the polymerization. After polymerization had begun as indicated by a 10 psig (0.07 MPa) drop in reactor pressure, additional TFE was added to the reactor to maintain pressure constant at 600 psig and agitator speed was increased to 50 rpm and held essentially constant for the remainder of the batch. No dwell period was used, and 0.3 part of TFE was added during the first 20 min after polymerization had begun. Total TFE added to the reactor in 403 minutes after initial pressurization was 14.5 parts. The agitator was then turned off, the TFE feed was stopped, and the reactor was cooled. When the temperature reached 90°C, the reactor was vented and the initiator feed was stopped. After venting to nearly atmospheric pressure, the reactor was purged with nitrogen to remove residual monomer. The dispersion was then discharged from the reactor and coagulated by vigorous stirring to obtain a TFE/HFP copolymer powder which was dried in a vacuum oven at 100°-120°C before being characterized. The resin had an MV of 0.6 x 10³ Pa·s, an HFPI of 8.87, a Tₘ(peak) of 171°C, and a Tₘ(end) of 204°C.

### Example 2 (outside the scope of the claims)

The reactor and charging procedure described in Example 1 were employed to add a total of 50.7 parts demineralized water and 0.081 part of Zonyl® TBS surfactant. After sealing the reactor, the agitator was turned on at 38 rpm and the reactor temperature was raised to 108°C. After the temperature had become steady at 108°C, HFP was added slowly to the reactor until its pressure was 550 psig (3.8 MPa). Then TFE was added to the reactor to achieve a final pressure of 600 psig (4.1 MPa). Then 0.66 part of a freshly prepared aqueous solution containing both 0.85 wt% APS and 1.32 wt% KPS was added at a rate of 0.033 part/min for 20 minutes. Polymerization began during this 20 minutes as indicated by a 17 psig (0.12 MPa) drop in reactor pressure.. No TFE was added during this 20 minute interval. At the end of the 20 minutes, the pressure was brought back to 4.1 MPa by the addition of 0.2 part of TFE. The remainder of the polymerization was carried out with TFE and initiator solution (0.24 wt% APS and 0.36 wt% KPS) additions as indicated below. The agitator speed was varied as needed to achieve the TFE feedrates shown below.

| Time Period (min) | TFE Feedrate (part/min) | Initiator Feedrate (part/min solution) |
|---|---|---|
| First 80 | 0.024 | 0.0154 |
| Next 60 | 0.032 | 0.0176 |
| Next 70 | 0.040 | 0.0198 |
| Next 70 | 0.050 | 0.0242 |
| Next 60 | 0.061 | 0.0286 |

After the TFE addition indicated above was complete, the reactor was cooled and vented, and the dispersion was discharged from the reactor as described in Example 1. The dispersion had 26.9 wt% solids. The raw dispersion particle size was 0.07 µm by photon correlation spectroscopy. A portion of the dispersion was cooled to 20°C and was then coagulated by vigorous stirring to obtain a powder which was dried in a vacuum oven at 100°C. Analysis indicated the TFE/HFP copolymer resin to have an MV of 1.7 x 10³ Pa.s, an HFPI of 8.34, a Tₘ(peak) of 166°C, and a Tₘ(end) of 201°C.

### Example 3 (outside the scope of the claims)

A 5 wt% solution of a TFE/HFP copolymer synthesized by the procedure of Example 1 and having HFPI = 8.30, Tₘ(peak) = 170°C and MV = 0.2 x 10³ Pa·s was made by the following procedure at ambient pressure. Into a 50 ml Erlenmeyer flask were placed 1.6 g of TFE/HFP copolymer resin and 28.5 g of perfluoro(tetradecahydrophenanthrene), C₁₄F₂₄ (Flutec® PP11, Rhone-Poulenc). The loaded flask was placed in a silicone oil bath at 160°C and stirred with a glass-coated magnetic stirrer bar. Dissolution was complete in about 30 minutes. A reflux condensor was not necessary since the wall of the flask was cool enough to condense the solvent. Upon cooling to room temperature, the solution formed a clear gel which readily redissolved upon warming to about 105°C.

### Example 4

This example illustrates the inclusion of perfluoro(alkyl vinyl) ether (PAVE) in TFE/ HFP copolymer. The procedure of Example 1 was followed except that the demineralized water precharge was 50.7 parts, 0.076 part of Zonyl® TBS surfactant was used, the reaction temperature was 108°C, HFP was added until pressure was 550 psig (3.8 MPa), 0.084 part of perfluoro(propyl vinyl) ether (PPVE) was charged after HFP addition, the first initiator addition was 0.66 part of solution containing both 0.45 wt% APS and 0.62 wt% KPS pumped at 0.066 part/min, PPVE was pumped into the reactor at 0.00034 part/min starting after polymerization had begun and continuing to the end of the batch (250 min), agitator speed was essentially constant at 40 rpm, and total TFE added to the reactor after initial pressurization was 14.2 parts. Total PPVE, precharged and pumped, added to the reactor was 0.17 part. The copolymer resin had an MV of 3.3 x 10³ Pa·s, an HFPI of 6.96, a Tₘ(peak) of 185°C, and a Tₘ(end) of 227°C.. High temperature ¹⁹F NMR analysis indicated that the copolymer contained 22.6 wt% HFP and 0.32 wt% PPVE.

### Example 5

This example illustrates the inclusion of perfluoroalkyl ethylene in TFE/HFP copolymer. The procedure of Example 1 was repeated, except that the amount of Zonyl® TBS surfactant was 0.054 part, 0.048 part of perfluorobutyl ethylene (PFBE) were charged to the polykettle after evacuation, and the 0.93 wt% APS solution was added at 0.020 part/min during polymerization. In this instance, the reaction time after initial pressurization was 277 min for the same total amount of TFE added to the reactor. The copolymer resin had an MV of 0.6 x 10³ Pa·s, an HFPI of 6.78, a Tₘ(peak) of 196°C, and a Tₘ(end) of 227°C.

### Example 6

This example illustrates the inclusion of hydroxyfunctional fluorovinyl ether in TFE/HFP copolymer. The procedure of Example 2 was followed, except that 0.065 part of Zonyl® TBS surfactant was used, 0.033 part of CF₂=CF-[OCF₂CF(CF₃)]-O-(CF₂)₂-CH₂-OH (EVE-OH, U.S. Patent 4,982,009) were added to the reactor after evacuation, the first initiator addition was 0.44 part of solution containing both 1.20 wt% APS and 1.80 wt% KPS, and the initiator pumped during reaction contained both 0.23 wt% APS and 0.40 wt% KPS. The observed pressure drop during the 20-min initiator addition period was 46 psig (0.32 MPa), and the resultant dispersion discharged from the reactor had 24.2 wt% solids. The copolymer resin had an MV of 0.8 x 10³ Pa·s, an HFPI of 7.38, a Tₘ(peak) of 188°C, and a Tₘ(end) of 234°C.

### Example 7

This example also illustrates the inclusion of PAVE in TFE/HFP copolymer. A cyclindrical, horizontally disposed, water-jacketed, paddle-stirred, stainless steel reactor having a length to diameter ratio of 1.5 and a water capacity of 8.37 parts by weight was charged with 4.63 parts of demineralized water. The reactor was heated to 65°C, evacuated, purged with TFE, and evacuated again. The vacuum in the reactor was then used to draw in a solution of 0.008 part of Zonyl® TBS surfactant in water (0.19 part). The solution was rinsed into the reactor with another 0.13 parts of water. The reactor was then sealed and 0.016 parts of perfluoro(methyl vinyl) ether (PMVE) were pumped into the reactor. Agitation was begun at 100 rpm and the reactor temperature was raised to 103°C. With the reactor temperature controlled at 103°C, HFP was added slowly to the reactor to acheive a pressure of 522 psig (3.6 MPa). Then TFE was added to the reactor to achieve a final pressure of 600 psig (4.1 MPa). A freshly prepared aqueous solution (0.066 part) of 1.4 wt% APS was then pumped into the reactor at 0.011 part/min. This was followed by a solution of 1.0 wt% APS which was pumped into the reactor at 0.002 part/min for the remainder of the polymerization. After reaction had commenced ("kickoff") as indicated by a 10 psig (0.07 MPa) drop in reactor pressure, additional PMVE was pumped into the reactor at 0.0005 part/min and additional TFE was added as needed to maintain a reactor pressure of 4.1 MPa. The agitator speed was held constant at 100 rpm for the entire polymerization. Total TFE added after the initial pressureup was 1.4 parts. The TFE feed was then stopped and full cooling was applied to the reactor. The time from polymerization kickoff until TFE feed was stopped was 273 min. When the reactor contents reached 90°C, the agitator was stopped and the reactor was vented. Venting required about 10 minutes and then the initiator flow was stopped. After venting to nearly atmospheric pressure, the reactor was purged with nitrogen to remove residual monomer. The dispersion was then discharged from the reactor and coagulated by vigorous stirring to obtain a copolymer powder which was dried in a vacuum oven at 100°C before being characterized. The resin had an MV of 0.3 x 10³ Pa·s, an HFPI of 6.47, a Tₘ(peak) of 163°C, and a Tₘ(end) of 198°C. The amount of PMVE in the TFE/HFP copolymer was 6.3 wt% based on analysis of an infrared absorbance at 889 cm⁻¹ attributed to PMVE in the copolymer. An identical polymerization was carried out except that the PMVE was not added to the polymerization. The product of that polymerization had an MV of 0.1 x 10³ Pa·s, an HFPI of 7.36, a Tₘ(peak) of 181°C, and a Tₘ(end) of 230°C. Infrared analysis of this copolymer resin showed no absorbance peak at 889 cm⁻¹.

## Claims

1. A partially crystalline copolymer of tetrafluoroethylene (TFE) and hexafluoropropylene (HFP) having a hexafluoropropylene index (HFPI) in the range 6.4 to about 9, said copolymer containing 0.1 to 10% by weight, based on the weight of the copolymer, of copolymerized units from at least one monomer selected from the group consisting of fluorolefins other than TFE and HFP and containing from 2 to 8 carbon atoms, perfluoro(alkyl vinyl)ether wherein the alkyl group contains from 1 to 6 carbon atoms, and ester, alcohol, or acid functional fluorovinyl ether.

2. The copolymer of claim 1 having a melt viscosity (MV) from about 0.1 x 10³ to about 10 x 10³ Pa·s.

3. The copolymer of Claim 2 wherein MV is in the range of 0.5 x 10³ to 5 x 10³ Pa·s.

4. The copolymer of Claim 1 wherein HFPI is in the range of 7.3 to 9.0.

5. The copolymer of Claim 1 wherein HFPI is in the range of 7.3 to 8.5.

6. A partially crystalline copolymer of tetrafluoroethylene (TFE), hexafluoropropylene (HFP), and 0.1 to 10% by weight, based on the weight of the copolymer, of at least one monomer selected from the group consisting of fluorolefins other than TFE and HFP and containing from 2 to 8 carbon atoms, perfluoro(alkyl vinyl)ether wherein the alkyl group contains from 1 to 6 carbon atoms, and ester, alcohol, or acid functional fluorovinyl ether, said copolymer having a hexafluoropropylene index (HFPI) in the range 6.4 to about 9 and a Tₘ(end) from about 180°C to about 255°C.

7. The copolymer of Claim 1 wherein said monomer is said fluoroolefin.

8. The copolymer of Claim 1 wherein said monomer is said perfluoro(alkyl vinyl) ether.

9. The copolymer of Claim 1 wherein said monomer is said fluorovinyl ether.

## Patentansprüche

1. Teilweise kristallines Copolymeres von Tetrafluorethylen (TFE) und Hexafluorpropylen (HFP) mit einem Hexafluorpropylenindex (HFPI) im Bereich von 6,4 bis etwa 9, wobei das Copolymere 0,1 bis 10 Gew.-%, bezogen auf das Gewicht des Copolymeren, copolymerisierte Einheiten von wenigstens einem Monomeren enthält, welches ausgewählt ist aus der Gruppe bestehend aus anderen Fluorolefinen als TFE und HFP, welche 2 bis 8 Kohlenstoffatome enthalten, Perfluor(alkylvinyl)ether, bei welchem die Alkylgruppe 1 bis 6 Kohlenstoffatome enthält, und ester-, alkohol- oder säurefunktionellem Fluorvinylether.

2. Copolymeres nach Anspruch 1 mit einer Schmelzviskosität (MV) von etwa 0,1 x 10³ bis etwa 10 x 10³ Pa·s.

3. Copolymeres nach Anspruch 2, bei welchem die MV im Bereich von 0,5 x 10³ bis 5 x 10³ Pa·s liegt.

4. Copolymeres nach Anspruch 1, bei welchem der HFPI im Bereich von 7,3 bis 9,0 liegt.

5. Copolymeres nach Anspruch 1, bei welchem der HFPI im Bereich von 7,3 bis 8,5 liegt.

6. Teilweise kristallines Copolymeres von Tetrafluorethylen (TFE), Hexafluorpropylen (HFP) und 0,1 bis 10 Gew.-%, bezogen auf das Gewicht des Copolymeren, wenigstens eines Monomeren, ausgewählt aus der Gruppe bestehend aus anderen Fluorolefinen als TFE und HFP, die 2 bis 8 Kohlenstoffatome enthalten, Perfluor(alkylvinyl)ether, bei welchem die Alkylgruppe 1 bis 6 Kohlenstoffatome enthält, und ester-, alkohol- oder säurefunktionellem Fluorvinylether, wobei das Copolymere einen Hexafluorpropylenindex (HFPI) im Bereich von 6,4 bis etwa 9 und einen Tₘ(Ende) von etwa 180°C bis etwa 255°C aufweist.

7. Copolymeres nach Anspruch 1, bei welchem das Monomere das genannte Fluorolefin ist.

8. Copolymeres nach Anspruch 1, bei welchem das Monomere der genannte Perfluor(alkylvinyl)ether ist.

9. Copolymeres nach Anspruch 1, bei welchem das Monomere der genannte Fluorvinylether ist.

## Revendications

1. Copolymère partiellement cristallin de tétrafluoroéthylène (TFE) et d'hexafluoropropylène (HFP) ayant un indice d'hexafluoropropylène (HFPI) compris dans l'intervalle de 6,4 à environ 9, ledit copolymère contenant 0,1 à 10% en poids, sur base du poids du copolymère, d'unités copolymérisées provenant d'au moins un monomère sélectionné dans le groupe constitué de fluorooléfines autres que le TFE et que le HFP et contenant de 2 à 8 atomes de carbone, d'un perfluoro(alkylvinyl)éther dans lequel le groupement alkyle contient de 1 à 6 atomes de carbone, et de fluorovinyléther à fonctionnalité ester, alcool ou acide.

2. Copolymère suivant la revendication 1, ayant une viscosité à l'état fondu (MV) d'environ 0,1 × 10³ à environ 10 × 10³ Pa·s.

3. Copolymère suivant la revendication 2, dans lequel la MV se situe dans l'intervalle de 0,5 × 10³ à 5 × 10³ Pa·s.

4. Copolymère suivant la revendication 1, dans lequel le HFPI se situe dans l'intervalle de 7,3 à 9,0.

5. Copolymère suivant la revendication 1, dans lequel le HFPI se situe dans l'intervalle de 7,3 à 8,5.

6. Copolymère partiellement cristallin de tétrafluoroéthylène (TFE), d'hexafluoropropylène (HFP) et de 0,1 à 10% en poids, sur base du poids du copolymère, d'au moins un monomère sélectionné dans le groupe constitué de fluorooléfines autres que le TFE et que le HFP et contenant de 2 à 8 atomes de carbone, d'un perfluoro(alkylvinyl)éther dans lequel le groupement alkyle contient de 1 à 6 atomes de carbone, et de fluorovinyléther à fonctionnalité ester, alcool ou acide, ledit copolymère ayant un indice d'hexafluoropropylène (HFPI) compris dans l'intervalle de 6,4 à environ 9 et une Tₘ (finale) allant d'environ 180°C à environ 255°C.

7. Copolymère suivant la revendication 1, dans lequel ledit monomère est ladite fluorooléfine.

8. Copolymère suivant la revendication 1, dans lequel ledit monomère est ledit perfluoro(alkylvinyl)éther.

9. Copolymère suivant la revendication 1, dans lequel ledit monomère est ledit fluorovinyléther.
